# EUROPEAN PATENT SPECIFICATION

(11) **EP 2 604 006 B1**
(45) Date of publication and mention of the grant of the patent: **08.06.2016**
(21) Application number: 11816103.3
(22) Date of filing: 11.08.2011
(51) Int. Cl.: H04L 12/851, G06F 15/80

(54) **METHOD AND APPARATUS FOR PACKET PROCESSING AND A PREPROCESSOR**
PAKETVERARBEITUNGSVERFAHREN UND -VORRICHTUNG SOWIE PRÄPROZESSOR
PROCÉDÉ ET APPAREIL DESTINÉS AU TRAITEMENT DE PAQUETS ET PRÉPROCESSEUR

(30) Priority: 11.08.2010 CN 201010250651
(43) Date of publication of application: 19.06.2013
(73) Proprietor: Hangzhou H3C Technologies Co., Ltd., Hangzhou, Zhejiang 310053 (CN)
(72) Inventor: GE, Changzhong, Beijing 100085 (CN)
(74) Representative: Stöckeler, Ferdinand
(86) International application number: PCT/CN2011/078244
(87) International publication number: WO 2012/019545

(56) References cited:
- EP-A1- 2 061 190
- CN-A- 101 150 493
- CN-A- 101 286 936
- CN-A- 101 656 677
- US-A1- 2005 086 393
- US-A1- 2005 190 694

## Description

### BACKGROUND

Currently, servers function as the sources of most network data, and overall performance requirements for the servers are therefore relatively high. Therefore, performance requirements for the processors of the servers are also relatively high.
US 2005/190694 A1 discloses a system for processing data packets, wherein a header processor and a classifier are provided. The classifier determines a flow to which a data packet belongs based on the source and destination IP addresses contained in the header of the data packet. Additionally, source and destination port values and a protocol value may be considered in determining which flow a packet belongs to. Each of a plurality of packet processors is designated to process data packets belonging to a particular flow.
US 2005/086393 A1 discloses an approach of controlling poer of network processor engines, wherein a method includes accessing network traffic metering data and controlling power consumption of individual ones of a set of network processor processing engines based on the metering data. Packets are classified as belonging to a particular flow and based on the flow, the packets are assigned for processing by a particular engine.
EP 2 061 190 A1 discloses flow classification of fragmented packets using an initial fragment processing module and a non-initial fragment processing module.
CN 101 286 936 A discloses a data message processing method and device. The method comprises the steps of receiving a data message, obtaining a rule matched with attribute information of the data message as well as hash keywords corresponding to the rule, obtaining a hash end value by carrying out hash calculation of the hash keywords, and shunting the data message to a processor corresponding to the end value. The method and device of the invention can shunt the data messages belonging to the same stream to the same processor.

### BRIEF DESCRIPTION OF THE DRAWINGS

Figure 1 is a schematic diagram illustrating a structure of an apparatus for packet processing in accordance with an example of the present disclosure.
Figure 2 is a schematic diagram illustrating a structure of a preprocessor in accordance with an example of the present disclosure.
Figure 3 is a flowchart of a method for packet processing in accordance with an example of the present disclosure.

### DETAILED DESCRIPTION

As performance requirements for processors applied to servers become increasingly higher, most conventional servers adopt high-performance processors that work in parallel with each other. However, high-performance processors also consume large amounts of power, and as a result, the servers that adopt the high-performance processors also have high power consumption. Although conventional processors with low power consumption are available, they have lower performance and are generally applied only to areas such as consumer electronics, but may not be suitable for use in servers.

An apparatus that overcomes some of the problems associated with the high power consumption of high-performance processors, while enabling high performance, is disclosed herein. The disclosed apparatus may be implemented in a server, and includes a preprocessor combined with multiple parallel processors that operate at low power consumption levels. The preprocessor classifies externally received packets and distributes the packets respectively to the processors, in which packets in a same flow are distributed for processing by the same processor. Thus, in one aspect, the low power consuming processors may process the packets distributed to them respectively in parallel to achieve a relatively high performance level. In another aspect, because lower power consumption processors are implemented in parallel, the power consumption level of the apparatus may be reduced as compared with the use of high-performance processors. When the apparatus is applied to a server, power consumption of the server may also be reduced. In another example, the apparatus disclosed herein may adopt other types of processors instead of the lower power consumption processors. In this example, due to preprocessing in the preprocessor, each of parallel processors is enabled to process a packet sent by the preprocessor, but does not need to determine whether the packet should be processed in the processor, and thus does not need to forward the packet between the parallel processors. In the following examples, the parallel processors may be the lower power consumption processors or other types of processors, and are thus not to be construed as being any one type of processors.

In view of the foregoing, the technical scheme may be implemented by the following:

The preprocessor in the apparatus is respectively connected with multiple processors, for instance, low power consumption processors, via a high-speed connection interface. The preprocessor is to classify externally received packets and to distribute the packets to the processors. An externally received packet is a packet sent by a source external to the server and received by an external interface of the server (e.g. a NIC, or a SerDes link that connects to another device etc). Packets in a same flow are sent to the same processor. Each of the processors is to receive and process the packets sent by the preprocessor.

The technical schemes will be further described in detail with reference to the accompanying drawings and specific examples.

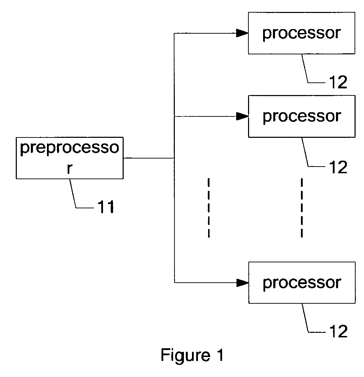

Figure 1 is a schematic diagram illustrating a structure of an apparatus for packet processing in accordance with an example. As shown in Figure 1, the apparatus for packet processing includes a preprocessor 11 and at least two processors 12, for instance, low power consumption processors. The preprocessor 11 is connected with the at least two processors 12 respectively via a high-speed connection interface. The preprocessor 11 is to receive packets inputted via an external interface, to classify the packets, and to distribute the classified packets to the processors 12, in which all of the packets in a same or common flow are distributed to same processor 12. Each of the at least two processors 12 is to process packets distributed by the preprocessor 11, and the number of processors 12 may be determined according to practical applications.

In addition, the preprocessor 11 is further to transmit subsequently received packets that belong to the same flow to the same processor 12.

For example, the total power consumption of a server having preprocessor 11 comprising a Field-programmable Gate Array (FPGA) chip of a certain company and ten processors 12, each having a 1.5Ghz CPU with four cores is about 82 watts after the preprocessor 11 and the processors 12 are implemented in the server according to the combination illustrated in Figure 1.

Comparatively, the total power consumption of a server having a 2.266 Ghz CPU with six cores provided by a certain company may be as high as 105 watts. As such, the total power consumption of the apparatus having a preprocessor in the above example is lower than that of the above mentioned 2.266 Ghz CPU with 6 cores.

As may be seen, when the apparatus for packet processing in this disclosure is implemented in the server, the server may operate at a high performance level while consume relatively lower amounts of power as compared with conventional servers that employ high-performance processors.

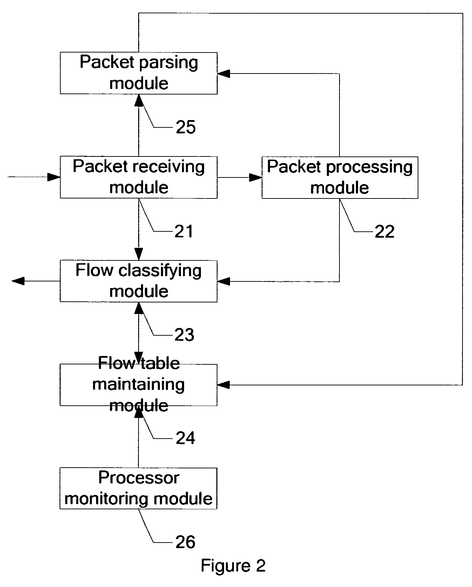

According to an example, the preprocessor 11 has the structure shown in Figure 2. As shown in Figure 2, the preprocessor 11 may include a packet receiving module 21, a packet processing module 22, a flow classifying module 23, and a flow table maintaining module 24.

The packet receiving module 21 is to receive packets via an external interface, to send a fragmented packet among the packets received to the packet processing module 22, and to send a non-fragmented packet among the received packets to the flow classifying module 23. Hereinafter, the non-fragmented packet is also called a packet for short.

In practical applications, the number of packets received by the server via the external interface is relatively large while the types thereof may vary. From the aspect of completeness of a packet format, the packets may be divided into two types, one is fragmented packets and the other is non-fragmented packets (called packets for short). The packets may belong to the same flow or may belong to different flows. The different flows may be relevant or irrelevant. In this example, a packet is processed as the smallest unit of a flow. Quintuple information of a non-fragmented packet is complete, while the first fragment of a fragmented packet has a format that is slightly different from that of subsequent fragments of the fragmented packet, that is, quintuple information of the first fragment is complete while quintuple information of the subsequent fragments is incomplete. Therefore, fragmented packets require further processing.

It should be noted that the complete quintuple information of a packet includes: Source Internet Protocol address (SIP), a Destination Internet Protocol address (DIP), a PROTOCAL number, a Source Port (SPORT) number, and a Destination Port (DPORT) number. A subsequent fragment of a fragmented packet may only include the SIP, the DIP and the PROTOCAL of the quintuple information, but may exclude the SPORT and the DPORT.

The packet processing module 22 is to record, when a fragmented packet is the first fragment of the packet, quintuple information and Internet Protocol Identity (IPID) information of the first fragment, and to send the first fragment to the flow classifying module 23. When the fragmented packet is a subsequent fragment of the packet, the packet processing module 22 is to query whether recorded information includes quintuple information corresponding to the information including the SIP, the DIP, the PROTOCAL and the IPID. If the recorded information includes the corresponding quintuple information, the packet processing module 22 is to obtain the SPORT and DPORT information in the quintuple information, to take the SIP, the DIP and the PROTOCAL in the subsequent fragment as well as the obtained SPORT and DPORT information as the complete quintuple information of the subsequent fragment and to send the subsequent fragment and the complete quintuple information of the subsequent fragment to the flow classifying module 23, or to send the subsequent fragment and the obtained SPORT and DPORT information to the flow classifying module 23. If the recorded information includes no corresponding quintuple information, the packet processing module 22 is to buffer the subsequent fragment until another fragmented packet, which is the first fragment of the packet is received, to record quintuple information and IPID information of the first fragment, to search recorded information of the first fragment according to the SIP, the DIP and the PROTOCAL as well as the IPID information in the subsequent fragment so as to obtain the SPORT and DPORT information in the recorded information of the first fragment, to take the SIP, the DIP and the PROTOCAL in the subsequent fragment as well as the obtained SPORT and DPORT information as the complete quintuple information of the subsequent fragment, and to send the subsequent fragment and the complete quintuple information of the subsequent fragment to the flow classifying module 23, or to send the first fragment to the flow classifying module 23 and to send the subsequent fragment and the obtained SPORT and DPORT information to the flow classifying module 23.

The flow classifying module 23 is to send the quintuple information of a packet sent by the packet receiving module 21 and the quintuple information of a packet sent by the packet processing module 22 to the flow table maintaining module 24, to receive a processor identifier corresponding to the quintuple information of a packet from the flow table maintaining module 24, and to send the packet to a processor corresponding to the processor identifier received.

The flow table maintaining module 24 is to receive the quintuple information of a packet sent by the flow classifying module 23, to query whether there is a flow table entry corresponding to the quintuple information of the packet. If a corresponding flow table entry exists, the flow table maintaining module 24 is to obtain the processor identifier in the flow table entry, and to send the processor identifier to the flow classifying module 23. If there is no corresponding flow table entry, the flow table maintaining module 24 is to create a flow table entry according to the quintuple information of the packet sent by the flow classifying module 23, in which the flow table entry at least includes the quintuple information of the packet and the processor identifier of the processor for processing the packet.

In addition, the preprocessor 11 may further include a packet parsing module 25. In this case, the packet receiving module 21 is further to send the non-fragmented packet (which is usually called as packet) to the packet parsing module 25. The packet processing module 22 is further to send the fragmented packet to the packet parsing module 25. In addition, the packet parsing module 25 is to parse the packet sent by the packet receiving module 21 and the packet sent by the packet processing module 22. If it is determined that the flow to which the packet belongs has a relevant flow, the packet parsing module 25 is to send quintuple information of flows that are relevant to each other to the flow table maintaining module 24 for instructing the flow table maintaining module 24 to create respective flow table entries in which the quintuple information of the packet and the quintuple information of the relevant flow correspond to the same processor identifier. The flow table maintaining module 24 is further to receive the quintuple information sent by the packet parsing module 25 and to create the flow table entries according to the quintuple information, in which the quintuple information of the packet and the quintuple information of the relevant flow correspond to the same processor identifier in each of the flow table entries.

In an example, it is supposed that there are at least two flows, flow 1 and flow 2, and there may be different types of ways to determine that the flow to which the packet belongs has a relevant flow.
1, When flow 1 arrives at the server, such as a text server, later than flow 2, that is, flow 2 arrives at the server first, it may be determined according to a predefined rule that flow 2 has a relevant flow (that is, flow 1 in this example) if it is determined that a packet in flow 2 includes quintuple information of another flow (supposed as flow 1 in this example) before flow 1 arrives at the server. For example, if it is determined that a PORT packet for an FTP control connection includes quintuple information of a data connection, the data connection is a relevant flow of the FTP control connection. In detail, suppose that flow 2 adopts a certain application protocol, when some packets in flow 2 arrive at the server, the server detects that a packet of flow 2 includes part or all of quintuple information of a new flow (that is, flow 1 in this example) according to features of the application protocol, and then may determine that flow 2 has a relevant flow (which is flow 1 in this example). For example, the server may determine the quintuple information of a data connection through parsing a PORT packet of an FTP control connection, that is, the server may determine a new flow, which is relevant with the current FTP control connection.
2, When flow 1 arrives at the server before flow 2, that is, the server receives the first packet of flow 2 after part of the packets of flow 1 are received, it is determined that flow 2 has a relevant flow (that is, flow 1 in this example) if flows with the same SIP address are defined as being relevant flows and if it is determined that the SIP of the first packet of flow 2 is the same as that of flow 1. This situation may be applied to a case in which a hacker attacks the server. For example, suppose flow 1 is from a user, when it is determined that the user is a hacker, all of the data sent by the user should be processed as invalid data so as to prevent the hacker's hostile attack because the SIP of flow 1 is the IP address of the user. That is, all flows with the same SIP as flow 1 are regarded as data flows of the user. In this case, all flows with the same SIP may be regarded as relevant flows.
3, When flow 1 arrives at the server before flow 2, that is, when the server receives a packet of flow 2 after part of the packets of flow 1 are received, it may be determined according to a predefined rule that flow 2 has a relevant flow, which is flow 1, if it is determined that a certain packet in flow 2 has the quintuple information of flow 1.

The above three ways are only examples, and there may be other ways in practice, as long as those ways may parse a packet of a certain flow to determine whether the flow to which the packet belongs has a relevant flow and may be implemented.

It should be noted that, when it is determined that the flow to which the packet belongs has a relevant flow, the packet parsing module 25 sends the quintuple information of the flow to which the packet belongs and the quintuple information of the relevant flow to the flow table maintaining module 24 to instruct the flow table maintaining module 24 to create a flow table entry.

In this example, creating a flow table entry may comprise creating a new flow table entry for the flow or modifying a previous flow table entry of the flow. For example, when none of the packets in a relevant flow was previously processed, a flow table entry is to be created for the relevant flow. Situations for modifying a previous flow table entry of the flow are described below. Suppose that there are two flows, flow 1 and flow 2. Flow 1 is processed by processor 1 while flow 2 is processed by processor 2, a packet of flow 2 is received when flow 1 is being processed, and it is determined that flow 2 has a relevant flow, which is flow 1 after parsing a packet of flow 2. In this case, a flow table entry of flow 1 may be modified in order to ensure that the two relevant flows may be processed by one processor, that is, flow 1 is also processed by processor 2; or, a flow table entry of flow 2 is modified, that is, flow 2 is also processed by processor 1.

It should be noted that creating the flow table entry may have different situations, for example:
1, When flow 1 arrives at the server later than flow 2, that is, when flow 2 arrives at the server first, a determination that a packet in flow 2 has the quintuple information of flow 1 may be made before flow 1 arrives at the server. In this case, if a flow table entry for flow 2 already exists, a flow table entry for the relevant flow may be created according to the quintuple information of the relevant flow, and a processor identifier in the flow table entry for the relevant flow is the same as a processor identifier in the flow table entry for flow 2.
2, When flow 1 arrives at the server before flow 2, that is, when the server receives the first packet of flow 2 after part of the packets of flow 1 are received, a determination that the SIP of the first packet in flow 2 is the same as the SIP of flow 1 may be made if it is defined in advance that flows with the same SIP are relevant flows. In this case, if a flow table entry for flow 1 already exists, a flow table entry should be created for flow 2 according to the quintuple information of flow 2, and a processor identifier in the flow table entry for flow 2 is the same as a processor identifier in a flow table entry for flow 1.
3, When flow 1 arrives at the server before flow 2, that is, when the server receives a packet of flow 2 after part of the packets of flow 1 are received, and if a determination that a certain packet in flow 2 has the quintuple information of flow 1 is made, there are two situations: the processor identifier in the flow table entry for flow 2 may be modified according to the quintuple information of flow 2 so that it is the same as the processor identifier in the flow table entry for flow 1; the processor identifier in the flow table entry for flow 1 may be modified according to the quintuple information of flow 1 so that it is the same as the processor identifier in the flow table entry for flow 2.

In an example, the preprocessor 11 may further include a processor monitoring module 26 to obtain information of each processor. The information of each processor at least includes a processor identifier of each processor, whether each processor works normally, and a current load situation of each processor.

The flow table maintaining module 24 is further to obtain the processor identifier from the processor monitoring module 26 and to create the flow table entry according to the processor identifier and the quintuple information.

In an example, the processor identifier obtained by the flow table maintaining module 24 from the processor monitoring module 26 may be the processor identifier corresponding to a processor which currently has the least load, so that load balancing between processors may be realized.

Furthermore, the flow table maintaining module 24 is further to set up a longest use period for each flow table entry. Each flow table entry corresponds to one longest use period, and all of the longest use periods may be the same or may be different. The flow table maintaining module 24 restarts timing of the use time of a flow table entry when the flow table entry is used during the longest use period, and deletes the flow table entry when the longest use period expires.

In an example, the format of the flow table entry may be referenced as Table 1.

**Table 1**

| Contents | Length (bytes) | Content description |
|---|---|---|
| SIP | 4 | Source IP address |
| DIP | 4 | Destination IP address |
| SPORT | 2 | Source port number |
| DPORT | 2 | Destination port number |
| PROTOCOL | 2 | Protocol number |
| Processor identifier | 2 | Packets in a flow are sent to a processor corresponding to the processor identifier |
| Longest use period | 4 | Use period of the flow table entry is 0 when the flow table entry is created, and is increased by 1 per second; the flow table entry is deleted when the longest use period expires |

The foregoing examples describe the structure of the preprocessor.

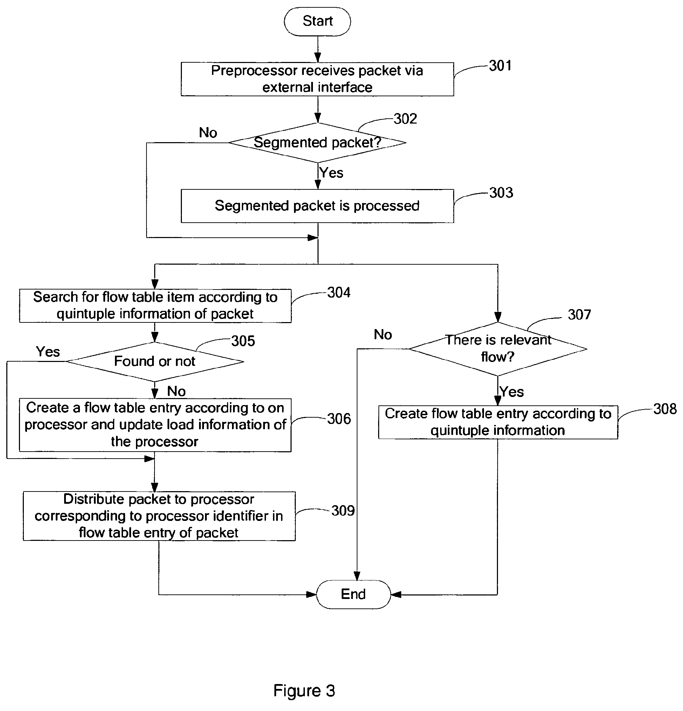

Based on the foregoing apparatus for packet processing and the preprocessor, Figure 3 shows a flowchart of a method for packet processing according to an example of the present disclosure. As shown in Figure 3, the method includes:
Block 301: The preprocessor in the apparatus for packet processing receives a packet via an external interface.

In practical applications, the number of packets received via the external interface is large and the types thereof may vary. From the aspect of completeness of a packet format, the packets may be divided into two types, one is fragmented packets and the other is non-fragmented packets (usually called packets for short). The packets may belong to the same flow or may belong to different flows. The different flows may be relevant or irrelevant.

Block 302: The preprocessor determines whether the packet is a fragmented packet. If the packet is a fragmented packet, block 303 is performed; otherwise, Blocks 304-306 and 307-308 are performed.

At block 302, quintuple information of a non-fragmented packet is complete, while the first fragment of a fragmented packet has a format slightly different from that of subsequent fragments of the fragmented packet. Quintuple information of the first fragment is complete, while quintuple information of the subsequent fragments is incomplete and only includes three pieces of information SIP, DIP and PROTOCAL in the quintuple information, but not the other two pieces of information SPORT and DPORT. However, a processor should obtain the complete quintuple information of a packet when processing the packet, and thus should process a fragmented packet and a non-fragmented packet in different manners.

Block 303: The fragmented packet is processed to obtain the complete quintuple information of the fragmented packet, and then blocks 304-306 and 307-308 are respectively performed.

At block 303, the complete quintuple information of the fragmented packet may be obtained through the following:

A determination as to whether the fragmented packet is a first fragment or a subsequent fragment is made according to packet header information of the fragmented packet. When the fragmented packet is the first fragment, the quintuple information and the IPID information of the first fragment are recorded, and then blocks 304-306 and 307-308 are respectively performed. When the fragmented packet is the subsequent fragment, a determination as to whether recorded information includes corresponding quintuple information according to the SIP, DIP and PROTOCAL information as well as the IPID information in the subsequent fragment is made. If the recorded information includes corresponding quintuple information, the SPORT and DPORT information is obtained from the corresponding quintuple information. Then, the SIP, DIP and PROTOCAL information in the subsequent fragment and the obtained SPORT and DPORT information are taken together as the complete quintuple information of the subsequent fragment, and then blocks 304-306 and 307-308 are performed respectively. If the recorded information includes no corresponding quintuple information, the subsequent fragment is buffered until another fragmented packet which is the first fragment is received, the quintuple information and the IPID information of the first fragment are recorded, and the recorded information of the first fragment is searched for according to the SIP, DIP and PROTOCAL information and the IPID information so as to obtain the SPORT and DPORT information from the recorded information of the first fragment; and the SIP, DIP and PROTOCAL information in the subsequent fragment and the obtained SPORT and DPORT information are taken as the complete quintuple information of the subsequent fragment; and then, blocks 304-306 and blocks 307-308 are performed respectively.

It should be noted that whether the fragmented packet is the first fragment or the subsequent packet may be determined according to the packet header information, which will not be described in detail again.

The following blocks 304-306 relate to a process of processing a packet, that is, the process of determining a processor for processing the packet according to the quintuple information of the packet. The blocks 307-308 relate to a process of creating a flow table for a relevant flow of a flow to which the packet belongs. The two processes may be performed simultaneously or alternatively, and are different processes which may be performed in any time sequence. In the following example, blocks 304-306 are performed first while blocks 307-308 are performed second.

It should be noted that it is possible to perform only blocks 304-306 without performing blocks 307-308. The following description is only an example.

Block 304: A flow table entry is searched according to the quintuple information of the packet.

At block 304, the flow table entry at least includes the quintuple information of the packet and a processor identifier of a processor for processing the packet, and may further include a longest use period of the flow table entry. Each flow table entry corresponds to one longest use period, and all of the longest use periods may be the same or may be different. Use time of a flow table entry may be recalculated when the flow table entry is used during the longest use period, and the flow table entry is deleted when the longest use period expires.

It should be noted that, because quintuple information of different packets in the same flow is the same, it may be ensured that all packets in the same flow may use the same processor, which simplifies a processing procedure in a processor.

Block 305: A determination as to whether the flow table entry corresponding to the packet is searched out is made. If the flow table entry is searched out, block 309 is performed; otherwise, block 306 is performed.

When the flow table entry is searched out, the packet is sent to the processor corresponding to the processor identifier in the flow table entry, and is processed by the processor. Meanwhile, the longest use period in the flow table entry is cleared so as to restart timing.

Block 306: A flow table entry is created for one processor selected from multiple processors, and load information of the selected processor is updated. Then, block 309 is performed.

When no corresponding flow table entry is searched out, this indicates that the packet is the first packet of a flow or that no other packets belonging to the same flow of the packet have been processed. In this case, a corresponding flow table entry for the packet should be created, that is, the corresponding flow table entry is created according to the quintuple information of the packet. Meanwhile, a processor may be selected from the processors, and the processor identifier of the selected processor is stored in the flow table entry. In addition, the longest use period may be set up for the processor processing the packet.

It should be noted that, the processor which currently has the least load may be selected so as to keep load balance between the processors, and load information of the selected processor should be updated.

It should also be noted that the preprocessor may periodically monitor processor information such as load situations of processors and whether the processors are operating normally, in order to correctly and timely obtain situations of the processors.

As such, the process of determining the processor for processing the packet according to the quintuple information of the packet is completed. Hereinafter, the process of creating the flow table entry for a relevant flow of a flow that the packet belongs to will be described in detail, that is, blocks 307-308.

Block 307: The packet is parsed, and a determination as to whether a relevant flow of the flow to which the packet belongs is made according to a parsing result. If there is a relevant flow, block 308 is performed. Otherwise, this process is terminated.

At block 307, suppose there are at least two flows, flow 1 and flow 2, the relevant flow of the flow to which the packet belongs may be determined in the flowing different situations:
1, When flow 1 arrives at the server later than flow 2, that is, when flow 2 arrives at the server first, a determination may be made that a packet in flow 2 has the quintuple information of flow 1 before flow 1 arrives at the server, and it is thus determined according to a predefined rule that flow 2 has the relevant flow, that is, flow 1. For example, if it is determined that a PORT packet for an FTP control connection has quintuple information of a data connection, the data connection is a relevant flow of the FTP control connection.
2, When flow 1 arrives at the server before flow 2, that is, when the server receives the first packet of flow 2 after part of the packets of flow 1 are received, a determination may be made that flow 2 has a relevant flow which is flow 1 if flows with the same SIP address are defined as relevant flows and if the SIP of the first packet in flow 2 is the same as the SIP of flow 1. This situation may be applied to a case in which a hacker attacks the server. For example, suppose flow 1 is from a user, when it is determined that the user is a hacker, all of the data sent out by the user should be processed as invalid data so as to prevent the hacker's hostile attack because the SIP of flow 1 is the IP address of the user. That is, all flows with the same SIP as flow 1 are regarded as data flows of the user. In this case, all flows with the same SIP may be regarded as relevant flows.
3, When flow 1 arrives at the server before flow 2, that is, when the server receives a packet of flow 2 after part of the packets of flow 1 are received, a determination may be made according to a predefined rule that flow 2 has a relevant flow which is flow 1 if a determination is made that a certain packet in flow 2 has the quintuple information of flow 1.

The above three situations are just examples, other situations may also be used to determine whether the flow to which the packet belongs has the relevant flow, as long as the situations may be implemented in practice.

Block 308: The flow table entry is created according to the quintuple information so that the quintuple information of the packet in the flow table entry and the quintuple information of the relevant flow correspond to the same processor identifier. And then this process is terminated.

The process of creating the flow table entry may comprise creating a new flow table entry for the flow of the packet or may comprise modifying a previous flow table entry of the flow. For example, when none of the packets in a relevant flow was previously processed, a flow table entry is to be created for the relevant flow. Situations for modifying a previous flow table entry of the flow are described below. Suppose that there are two flows, flow 1 and flow 2. Flow 1 is processed by processor 1 while flow 2 is processed by processor 2, a packet of flow 2 is received when flow 1 is being processed, and it is found that flow 2 has a relevant flow which is flow 1 through parsing a packet of flow 2. In this case, a flow table entry of flow 1 may be modified in order to ensure that the two relevant flows may be processed by one processor, that is, flow 1 is also processed by processor 2; or, a flow table entry of flow 2 is modified, that is, flow 2 is also processed by processor 1.

It should be noted that, the process of creating the flow table entry may have different situations, for example:
1, When flow 1 arrives at the server later than flow 2, that is, when flow 2 arrives at the server first, a determination that a packet in flow 2 has the quintuple information of flow 1 may be made before flow 1 arrives at the server. In this case, if a flow table entry for flow 2 already exists, a flow table entry is created for the relevant flow according to the quintuple information of the relevant flow, and a processor identifier in the flow table entry is the same as a processor identifier in the flow table entry for flow 2.
2, When flow 1 arrives at the server before flow 2, that is, when the server receives the first packet of flow 2 after part of the packets of flow 1 are received, a determination that the SIP of the first packet in flow 2 is the same as the SIP of flow 1 may be made if it is defined in advance that flows with the same SIP are relevant flows. In this case, if a flow table entry for flow 1 already exists, the flow table entry may be created for flow 2 according to the quintuple information of flow 2. In addition, the processor identifier in the flow table entry created for flow 2 is the same as the processor identifier in the flow table entry for flow 1.
3, When flow 1 arrives at the server before flow 2, that is, when the server receives a packet of flow 2 after part of the packets of flow 1 are received, there are two situations after it is determined that a received packet in flow 2 has the quintuple information of flow 1: the processor identifier in the flow table entry for flow 2 is modified accordingly so that it is the same as the processor identifier in the flow table entry for flow 1; the processor identifier in the flow table entry for flow 1 is modified accordingly so that it is the same as the processor identifier in the flow table entry for flow 2.

Block 309: The packet is distributed to the processor corresponding to the processor identifier in the flow table entry for the packet, and the packet processing is terminated.

It should be noted that block 309 is performed after blocks 304-306.

Thus, the entire procedure of the method for packet processing in examples discussed above is finished.

It should be noted that the procedure illustrated in Figure 3 is described by an example in which a certain packet is processed, and other packets may also be processed by the same procedure in Figure 3, which will not be described again.

To sum up, in the apparatus for packet processing in the examples described herein, the preprocessor and multiple parallel processors are combined and applied to the server; the preprocessor classifies externally received packets according to a predefined rule and distributes the classified packets respectively to the processors, in which packets in the same flow are distributed to the same processor. Because the preprocessor classifies the externally received packets, it is unnecessary for each processor to classify the packets again, and therefore, the classification of packets is more accurate and simpler than in conventional servers. In addition, multiple processors may process packets distributed to them in parallel, so that a relatively higher overall performance may be achieved. When the apparatus is applied to the server, the overall power consumption of the server may be reduced.

Meanwhile, the preprocessor distributes the packets in advance so that the packets in the same flow may be processed by the same processor, but not by different processors. In this regard, packets in the same flow need not be forwarded between processors and a processing procedure in the processors is simplified.

In addition, the parallel processors may comprise processors with low power consumption, which further reduces power consumption of the apparatus for packet processing and reduces power consumption of the server using the apparatus for packet processing.

Furthermore, state information of each processor is monitored in the examples described herein, so as to coordinate operations between different processors, reduce interference between different processors and make the system more stable.

The foregoing description should only be construed as examples. The protection scope, however, is not limited to the above description. Any change or substitution, easily occurring to those skilled in the art, should be construed as being covered by the protection scope.

## Claims

1. An apparatus for packet processing, the apparatus to be implemented in a server, the apparatus comprising:
a preprocessor (11); and
at least two processors (12) respectively connected with the preprocessor;
wherein the preprocessor (11) is to classify packets received at an external interface of the server, and to distribute the classified packets to the respective processors, wherein packets in a same flow are distributed to a same processor, and
wherein each of the processors is to receive and process a packet distributed to the processors by the preprocessor;
and **characterized in that** in response to determining that a second flow of packets is relevant to a first flow of packets, the preprocessor (11) is adapted to send a packet belonging to the second flow to a same processor (12) as a packet belonging to the first flow,
wherein flows are regarded as relevant flows when at least one of the following conditions is fulfilled:
the packets of the flows have the same source IP address,
a packet of a flow being a data connection and a packet of a flow comprising a port for a FTP control connection include the same tuple information.

2. The apparatus of any of the above claims, wherein the preprocessor (11) comprises:
a packet receiving module (21);
a packet processing module (22);
a flow classifying module (23); and
a flow table maintaining module (24);
wherein the packet receiving module (21) is to receive the packets from an external interface of the server, to send a fragmented packet among the packets received to the packet processing module (22), and to send a non-fragmented packet among the packets received to the flow classifying module (23);
wherein the packet processing module (22) is to record,
when the fragmented packet is the first fragment of the fragmented packet, quintuple information and Internet Protocol Identity (IPID) information of the first fragment, and to send the first fragment to the flow classifying module;
when the fragmented packet is a subsequent fragment, to obtain Source PORT (SPORT) and Destination PORT (DPORT) information corresponding to quintuple information of the subsequent fragment, and
if the SPORT and DPORT information is obtained, to send the subsequent fragment and the SPORT and DPORT information obtained to the flow classifying module, and
if no SPORT and DPORT information is obtained, to buffer the subsequent fragment and continue obtaining the SPORT and DPORT information, and to send the subsequent fragment and the SPORT and DPORT information obtained to the flow classifying module when the SPORT and DPORT information is obtained;
wherein the flow classifying module (23) is to receive quintuple information of a packet sent by the packet receiving module and quintuple information of a packet sent by the packet processing module to the flow table maintaining module, to receive a processor identifier corresponding to quintuple information of a packet from the flow table maintaining module, and to send the packet to a processor corresponding to the processor identifier received; and
wherein the flow table maintaining module (24) is to receive the quintuple information of a packet sent by the flow classifying module (23), to query whether there is a flow table entry corresponding to the quintuple information of the packet;
if the flow table entry exists, to obtain the processor identifier in the flow table entry and send the processor identifier to the flow classifying module;
if the flow table entry does not exist, to create a flow table entry according to the quintuple information of the packet sent by the flow classifying module, wherein the flow table entry comprises the quintuple information of the packet and the processor identifier of the processor for processing the packet.

3. The apparatus of claim 2, wherein the preprocessor (11) further comprises a packet parsing module (25);
wherein the packet receiving module (21) is further to send the non-fragmented packet received to the packet parsing module (25);
wherein the packet processing module (22) is further to send the fragmented packet to the packet parsing module;
wherein the packet parsing module (25) is to:
parse the packet sent by the packet receiving module (21) and the packet sent by the packet processing module (22), and
send, if a determination that a flow to which the packet belongs has a relevant flow is made, respective quintuple information of flows which are relevant to the flow table maintaining module for instructing the flow table maintaining module to create respective flow table entries in which the quintuple information of the packet and quintuple information of the relevant flow correspond to a same processor identifier; and
wherein the flow table maintaining module (24)is to receive the quintuple information sent by the packet parsing module, and to create the flow table entries according to the quintuple information, wherein the quintuple information of the packet and the quintuple information of the relevant flow correspond to the same processor identifier in each of the flow table entries.

4. The apparatus of claim 3, wherein the preprocessor further comprises a processor monitoring module (26);
wherein the processor monitoring module (26) is to obtain information of each of the at least two processors (12), wherein the information comprises a processor identifier of each of the at least two processors, whether each of the at least two processors is operating normally, and a load situation of each of the at least two processors; and
wherein the flow table maintaining module (24) is further to obtain the processor identifier of the processor from the processor monitoring module (26), and to create the flow table entries according to the processor identifier and the quintuple information.

5. The apparatus of claim 4, wherein the processor identifier of the processor obtained from the processor monitoring module by the flow table maintaining module (24) is the processor identifier of a processor which currently has the least load.

6. The apparatus of claim 4, wherein the flow table maintaining module is further to at least one of set up a longest use period for a flow table entry and delete the flow table entry when the flow table entry reaches the longest use period.

7. A method for packet processing, said method to be implemented in a server comprising a preprocessor (11) and at least two processors (12) respectively connected with the preprocessor, the method comprising:
receiving (301), by the preprocessor (11), a packet from an external interface of the server;
classifying, by the preprocessor (11), the packet; and
distributing, by the preprocessor (11), the classified packet to a processor among the at least two processors (12), wherein packets in a same flow of packets are distributed to the same processor and **characterized by** the preprocessor distributing packets in flows of packets, that are relevant to each other, to the same processor,
wherein flows are regarded as relevant flows when at least one of the following conditions is fulfilled:
the packets of the flows have the same source IP address, and
a packet of a flow being a data connection and a packet of a flow comprising a port for a FTP control connection include the same tuple information.

8. The method of claim 7, wherein classifying the packet by the preprocessor (11) comprises:
determining (302), by the preprocessor (11), whether the received packet is a fragmented packet;
if the packet is a fragmented packet,
processing (303) the fragmented packet,
obtaining complete quintuple information of the fragmented packet,
determining a processor for processing the packet according to the quintuple information of the fragmente d packet, and
distributing (309) the packet to the determined processor;
otherwise, directly determining a processor for processing the packet according to quintuple information of the packet, and distributing the packet to the determined processor.

9. The method of claim 8, wherein processing the fragmented packet and obtaining the complete quintuple information of the fragmented packet comprise:
determining whether the fragmented packet is the first fragment according to packet header identifier information of the fragmented packet;
if the fragmented packet is the first fragment, recording the quintuple information and Internet Protocol Identity (IPID) information of the first fragment;
if the fragmented packet is a subsequent fragment, querying whether recorded information includes quintuple information corresponding to Source IP address (SIP), Destination IP address (DIP) and PROTOCOL information in quintuple information of the subsequent fragment as well as IPID information of the subsequent fragment;
if the recorded information includes the corresponding quintuple information, obtaining Source PORT (SPORT) and Destination PORT (DPORT) information from the corresponding quintuple information, and taking the SIP, DIP and PROTOCOL information in the quintuple information of the subsequent fragment and the SPORT and DPORT information obtained as the complete quintuple information of the subsequent fragment;
if the recorded information includes no corresponding quintuple information, buffering the subsequent fragment until another fragmented packet, which is the first fragment, is received, recording quintuple information and IPID information of the first fragment, searching recorded information of the first fragment for quintuple information corresponding to the SIP, DIP and PROTOCOL information and the IPID information in the subsequent fragment buffered to obtain SPORT and DPORT information from the recorded information of the first fragment, and taking the SIP, DIP and PROTOCOL information in the subsequent fragment and the SPORT and DPORT information obtained as the complete quintuple information.

10. The method of claim 9, wherein determining the processor for processing the packet according to the quintuple information of the packet comprises:
determining whether there is a flow table entry corresponding to the quintuple information of the packet;
if the flow table entry exists, taking a processor corresponding to a processor identifier in the flow table entry as the processor for processing the packet;
otherwise, choosing a processor from the at least two processors (12), creating a flow table entry according to the chosen processor and the quintuple information of the packet, and taking the chosen processor as the processor for processing the packet.

11. The method of claim 10, wherein the chosen processor is a processor that currently has the least load among the at least two processors;
wherein the method further comprises:
after choosing the processor, updating current load information of the chosen processor.

12. The method of claim 10, further comprising:
after receiving the packet, determining (307) whether a flow to which the packet belongs has a relevant flow;
if the flow has a relevant flow, choosing a processor from the at least two processors, creating or modifying a flow table entry according to the chosen processor and quintuple information of the flow, creating or modifying another flow table entry according to the chosen processor and quintuple information of the relevant flow(308), and taking the chosen processor as a processor for processing the flow and the relevant flow.

## Patentansprüche

1. Vorrichtung zum Paketverarbeiten, wobei die Vorrichtung in einem Server zu implementieren ist, wobei die Vorrichtung Folgendes umfasst:
einen Vorprozessor (11); und
wenigstens zwei Prozessoren (12), die jeweils mit dem Vorprozessor verbunden sind;
wobei der Vorprozessor (11) an einer externen Schnittstelle des Servers empfangene Pakete klassifiziert und die klassifizierten Pakete an die jeweiligen Prozessoren verteilt, wobei Pakete in einem selben Fluss an einen selben Prozessor verteilt werden und
wobei jeder der Prozessoren ein von dem Vorprozessor an die Prozessoren verteiltes Paket empfängt und verarbeitet;
und **dadurch gekennzeichnet, dass** als Reaktion auf ein Bestimmen, dass ein zweiter Fluss von Paketen für einen ersten Fluss von Paketen relevant ist, der Vorprozessor (11) angepasst ist, ein zu dem zweiten Fluss gehörendes Paket als ein zu dem ersten Fluss gehörendes Paket an einen selben Prozessor (12) zu senden,
wobei Flüsse als relevante Flüsse gelten, wenn wenigstens eine der folgenden Bedingungen erfüllt ist:
die Pakete der Flüsse weisen dieselbe Quell-IP-Adresse auf,
ein Paket eines Flusses, das eine Datenverbindung ist, und ein Paket eines Flusses, das einen Port für eine FTP-Steuerungsverbindung umfasst, enthalten dieselben Tupelinformationen.

2. Vorrichtung nach einem der vorherigen Ansprüche, wobei der Vorprozessor (11) Folgendes umfasst:
ein Paketempfangsmodul (21);
ein Paketverarbeitungsmodul (22);
ein Flussklassifizierungsmodul (23); und
ein Flusstabellenverwaltungsmodul (24);
wobei das Paketempfangsmodul (21) die Pakete von einer externen Schnittstelle des Servers empfängt, ein fragmentiertes Paket unter den empfangenen Paketen an das Paketverarbeitungsmodul (22) sendet und ein nicht fragmentiertes Paket unter den empfangenen Paketen an das Flussklassifizierungsmodul (23) sendet;
wobei das Paketverarbeitungsmodul (22),
wenn das fragmentierte Paket das erste Fragment des fragmentierten Pakets ist, Quintupelinformationen und Internetprotokollidentitäts(IPID)-Informationen des ersten Fragments aufzeichnet und das erste Fragment an das Flussklassifizierungsmodul sendet;
wenn das fragmentierte Paket ein nachfolgendes Fragment ist, Source-PORT(SPORT)- und Destination-PORT(DPORT)-Informationen, die Quintupelinformationen des nachfolgenden Fragments entsprechen, erhält und
falls die SPORT- und die DPORT-Informationen erhalten werden, das nachfolgende Fragment und die erhaltenen SPORT- und DPORT-Informationen an das Flussklassifizierungsmodul sendet, und
falls keine SPORT- und DPORT-Informationen erhalten werden, das nachfolgende Fragment puffert und fortfährt, die SPORT- und die DPORT-Informationen zu erhalten, und das nachfolgende Fragment und die erhaltenen SPORT- und DPORT-Informationen an das Flussklassifizierungsmodul sendet, wenn die SPORT- und die DPORT-Informationen erhalten sind;
wobei das Flussklassifizierungsmodul (23) Quintupelinformationen eines von dem Paketempfangsmodul gesendeten Pakets und Quintupelinformationen eines von dem Paketverarbeitungsmodul an das Flusstabellenverwaltungsmodul gesendeten Pakets empfängt, einen Prozessoridentifizierer, der Quintupelinformationen eines Pakets entspricht, von dem Flusstabellenverwaltungsmodul empfängt und das Paket an einen dem empfangenen Prozessoridentifizierer entsprechenden Prozessor sendet; und
wobei das Flusstabellenverwaltungsmodul (24) die Quintupelinformationen eines von dem Flussklassifizierungsmodul (23) gesendeten Pakets empfängt, um abzufragen, ob es einen Flusstabelleneintrag, der den Quintupelinformationen des Pakets entspricht, gibt;
falls der Flusstabelleneintrag besteht, den Prozessoridentifizierer in dem Flusstabelleneintrag erhält und den Prozessoridentifizierer an das Flussklassifizierungsmodul sendet;
falls der Flusstabelleneintrag nicht besteht, einen Flusstabelleneintrag entsprechend den Quintupelinformationen des von dem Flussklassifizierungsmodul gesendeten Pakets erstellt, wobei der Flusstabelleneintrag die Quintupelinformationen des Pakets und den Prozessoridentifizierer des Prozessors zum Verarbeiten des Pakets umfasst.

3. Vorrichtung nach Anspruch 2, wobei der Vorprozessor (11) ferner ein Paketanalysemodul (25) umfasst;
wobei das Paketempfangsmodul (21) ferner das empfangene nicht fragmentierte Paket an das Paketanalysemodul (25) sendet;
wobei das Paketverarbeitungsmodul (22) ferner das fragmentierte Paket an das Paketanalysemodul sendet;
wobei das Paketanalysemodul (25) Folgendes durchführt:
Analysieren des von dem Paketempfangsmodul (21) gesendeten Pakets und des von dem Paketverarbeitungsmodul (22) gesendeten Pakets und
falls bestimmt wird, dass ein Fluss, zu dem das Paket gehört, einen relevanten Fluss aufweist, Senden von jeweiligen Quintupelinformationen von Flüssen, die für das Flusstabellenverwaltungsmodul relevant sind, um das Flusstabellenverwaltungsmodul anzuweisen, jeweilige Flusstabelleneinträge, in denen die Quintupelinformationen des Pakets und die Quintupelinformationen des relevanten Flusses einem selben Prozessoridentifizierer entsprechen, zu erstellen; und
wobei das Flusstabellenverwaltungsmodul (24) die von dem Paketanalysemodul gesendeten Quintupelinformationen empfängt und die Flusstabelleneinträge entsprechend den Quintupelinformationen erstellt, wobei die Quintupelinformationen des Pakets und die Quintupelinformationen des relevanten Flusses in jedem Flusstabelleneintrag demselben Prozessoridentifizierer entsprechen.

4. Vorrichtung nach Anspruch 3, wobei der Vorprozessor ferner ein Prozessorüberwachungsmodul (26) umfasst;
wobei das Prozessorüberwachungsmodul (26) von jedem der wenigstens zwei Prozessoren (12) Informationen erhält, wobei die Informationen einen Prozessoridentifizierer jedes der wenigstens zwei Prozessoren, wenn jeder der wenigstens zwei Prozessoren normal funktioniert, und eine Last-Situation jedes der wenigstens zwei Prozessoren umfassen; und
wobei das Flusstabellenverwaltungsmodul (24) ferner den Prozessoridentifizierer des Prozessors aus dem Prozessorüberwachungsmodul (26) erhält und die Flusstabelleneinträge entsprechend dem Prozessoridentifizierer und den Quintupelinformationen erstellt.

5. Vorrichtung nach Anspruch 4, wobei der Prozessoridentifizierer des durch das Flusstabellenverwaltungsmodul (24) von dem Prozessorüberwachungsmodul erhaltenen Prozessors der Prozessoridentifizierer eines Prozessors ist, der aktuell die geringste Last aufweist.

6. Vorrichtung nach Anspruch 4, wobei das Flusstabellenverwaltungsmodul ferner einen längsten Nutzungszeitraum für einen Flusstabelleneintrag einrichtet und/oder den Flusstabelleneintrag löscht, wenn der Flusstabelleneintrag den längsten Benutzungszeitraum erreicht.

7. Verfahren zum Paketverarbeiten, wobei das in einem Server zu implementierende Verfahren einen Vorprozessor (11) und wenigstens zwei Prozessoren (12), die jeweils mit dem Vorprozessor verbunden sind, umfasst, wobei das Verfahren Folgendes umfasst:
Empfangen (301), durch den Vorprozessor (11), eines Pakets von einer externen Schnittstelle des Servers;
Klassifizieren, durch den Vorprozessor (11), des Pakets; und
Verteilen, durch den Vorprozessor (11), des klassifizierten Pakets an einen Prozessor unter den wenigstens zwei Prozessoren (12), wobei Pakete in einem selben Fluss von Paketen an denselben Prozessor verteilt werden, und **dadurch gekennzeichnet, dass** der Vorprozessor Pakete in Flüssen von Paketen, die zueinander relevant sind, an denselben Prozessor verteilt,
wobei Flüsse als relevante Flüsse gelten, wenn wenigstens eine der folgenden Bedingungen erfüllt ist:
die Pakete der Flüsse weisen dieselbe Quell-IP-Adresse auf und
ein Paket eines Flusses, das eine Datenverbindung ist, und ein Paket eines Flusses, das einen Port für eine FTP-Steuerungsverbindung umfasst, enthalten dieselben Tupelinformationen.

8. Verfahren nach Anspruch 7, wobei das Klassifizieren des Pakets durch den Vorprozessor (11) Folgendes umfasst:
Bestimmen (302), durch den Vorprozessor (11), ob das empfangene Paket ein fragmentiertes Paket ist;
falls das Paket ein fragmentiertes Paket ist,
Verarbeiten (303) des fragmentierten Pakets,
Erhalten vollständiger Quintupelinformationen des fragmentierten Pakets,
Bestimmen eines Prozessors zum Verarbeiten des Pakets gemäß den Quintupelinformationen des fragmentierten Pakets und
Verteilen (309) des Pakets an den bestimmten Prozessor;
andernfalls, direktes Bestimmen eines Prozessors zum Verarbeiten des Pakets gemäß den Quintupelinformationen des Pakets und Verteilen des Pakets an den bestimmten Prozessor.

9. Verfahren nach Anspruch 8, wobei das Verarbeiten des fragmentierten Pakets und das Erhalten der vollständigen Quintupelinformationen des fragmentierten Pakets Folgendes umfassen:
Bestimmen, ob das fragmentierte Paket das erste Fragment gemäß den Paketkopfzeilen-Identifizierungsinformationen des fragmentierten Pakets ist;
falls das fragmentierte Paket das erste Fragment ist, Aufzeichnen der Quintupelinformationen und der Internetprotokollidentitäts(IPID)-Informationen des ersten Fragments;
falls das fragmentierte Paket ein nachfolgendes Fragment ist, Abfragen, ob aufgezeichnete Informationen Quintupelinformationen entsprechend einer Quell-IP-Adresse (SIP), einer Ziel-IP-Adresse (DIP) und von PROTOKOLL-Informationen in Quintupelinformationen des nachfolgenden Fragments sowie IPID-Informationen des nachfolgenden Fragments enthalten;
falls die aufgezeichneten Informationen die entsprechenden Quintupelinformationen enthalten, Erhalten von Source-PORT(SPORT)- und Destination-PORT(DPORT)-Informationen von den entsprechenden Quintupelinformationen und Aufnehmen der SIP-, der DIP- und der PROTOKOLL-Informationen in die Quintupelinformationen des nachfolgenden Fragments und der SPORT- und der DPORT-Informationen, die als die vollständigen Quintupelinformationen des nachfolgenden Fragments erhalten werden;
falls die aufgezeichneten Informationen keine entsprechenden Quintupelinformationen enthalten, Puffern des nachfolgenden Fragments, bis ein anderes fragmentiertes Paket, das das erste Fragment ist, empfangen wird, Aufzeichnen von Quintupelinformationen und von IPID-Informationen des ersten Fragments, Durchsuchen von aufgezeichneten Informationen des ersten Fragments nach Quintupelinformationen, die den SIP-, den DIP- und den PROTOKOLL-Informationen und den IPID-Informationen in dem nachfolgenden Fragment, das gepuffert ist, entsprechen, um SPORT- und DPORT-Informationen aus den aufgezeichneten Informationen des ersten Fragments zu erhalten, und Aufnehmen der SIP-, der DIP- und der PROTOKOLL-Informationen in das nachfolgende Fragment und die erhaltenen SPORT- und DPORT-Informationen als die vollständigen Quintupelinformationen.

10. Verfahren nach Anspruch 9, wobei ein Bestimmen des Prozessors zum Verarbeiten des Pakets gemäß den Quintupelinformationen des Pakets Folgendes umfasst:
Bestimmen, ob es einen Flusstabelleneintrag entsprechend den Quintupelinformationen des Pakets gibt;
falls der Flusstabelleneintrag besteht, Aufnehmen eines einem Prozessoridentifizierer entsprechenden Prozessors in den Flusstabelleneintrag als der Prozessor zum Verarbeiten des Pakets;
andernfalls, Auswählen eines Prozessors aus den wenigstens zwei Prozessoren (12), Erstellen eines Flusstabelleneintrags gemäß dem ausgewählten Prozessor und den Quintupelinformationen des Pakets und Aufnehmen des ausgewählten Prozessors als der Prozessor zum Verarbeiten des Pakets.

11. Verfahren nach Anspruch 10, wobei der ausgewählte Prozessor ein Prozessor ist, der aktuell die geringste Last unter den wenigstens zwei Prozessoren aufweist;
wobei das Verfahren ferner Folgendes umfasst:
nach einem Auswählen des Prozessors, Aktualisieren der aktuellen Last-Informationen des ausgewählten Prozessors.

12. Verfahren nach Anspruch 10, ferner Folgendes umfassend:
nach einem Empfangen des Pakets, Bestimmen (307), ob ein Fluss, zu dem das Paket gehört, einen relevanten Fluss aufweist;
falls der Fluss einen relevanten Fluss aufweist, Auswählen eines Prozessors aus den wenigstens zwei Prozessoren, Erstellen oder Modifizieren eines Flusstabelleneintrags entsprechend dem ausgewählten Prozessor und den Quintupelinformationen des Flusses; Erstellen oder Modifizieren eines anderen Flusstabelleneintrags entsprechend dem ausgewählten Prozessor und den Quintupelinformationen des relevanten Flusses (308) und Aufnehmen des ausgewählten Prozessors als ein Prozessor zum Verarbeiten des Flusses und des relevanten Flusses.

## Revendications

1. Appareil de traitement de paquet, l'appareil devant être mis en oeuvre dans un serveur, l'appareil comprenant :
un préprocesseur (11) ; et
au moins deux processeurs (12) raccordés respectivement au préprocesseur ;
le préprocesseur (11) devant classifier les paquets reçus à une interface externe du serveur et distribuer les paquets classifiés aux processeurs respectifs, les paquets d'un même flux étant distribués à un même processeur, et
chacun des processeurs devant recevoir et traiter un paquet distribué aux processeurs par le préprocesseur ;
et **caractérisé en ce qu'**en réponse à la détermination comme quoi un deuxième flux de paquets est utile à un premier flux de paquets, le préprocesseur (11) est conçu pour envoyer un paquet appartenant au deuxième flux d'un même processeur (12) sous forme d'un paquet appartenant un premier flux,
les flux étant considérés comme des flux utiles quand au moins l'une des conditions suivantes est remplie :
les paquets des flux ont la même adresse IP source,
un paquet d'un flux étant une connexion de données et un paquet d'un flux comprenant un port pour une connexion de commande FTP contiennent la même information d'uplet.

2. Appareil selon la revendication précédente, dans lequel le préprocesseur (11) comprend :
un module de réception de paquet (21) ;
un module de traitement de paquet (22) ;
un module de classification de flux (23) ; et
un module de maintenance de table de flux (24) ;
le module de réception de paquet (21) devant recevoir les paquets à partir d'une interface externe du serveur, pour envoyer un paquet fragmenté parmi les paquets reçus dans le module de traitement de paquet (22), et pour envoyer un paquet non fragmenté parmi les paquets reçus au module de classification de flux (23) ;
le module de traitement de paquet (22) devant enregistrer,
quand le paquet fragmenté est le premier fragment du paquet fragmenté, une information quintuple et une information d'identité de protocole internet (IPID) du premier fragment, et devant envoyer le premier fragment au module de classification de flux ;
quand le paquet fragmenté est un fragment suivant, devant obtenir des informations de PORT Source (SPORT) et de PORT Destination (DPORT) correspondant à l'information quintuple du fragment suivant, et
si l'on obtient les informations SPORT et DPORT, devant envoyer le fragment suivant et les informations SPORT et DPORT obtenues au module de classification de flux, et
si aucune information SPORT et DPORT n'est obtenue, devant tamponner le fragment suivant et continuer à obtenir les informations SPORT et DPORT et devant envoyer le fragment suivant et les informations SPORT et DPORT obtenues au module de classification de flux quand les informations SPORT et DPORT sont obtenues ;
dans lequel le module de classification de flux (23) doit recevoir une information quintuple d'un paquet envoyé par le module de réception de paquet et une information quintuple d'un paquet envoyé par le module de traitement de paquet jusqu'au module de maintenance de table de flux, pour recevoir un identifiant de processeur correspondant à l'information quintuple d'un paquet depuis le module de maintenance de table de flux et pour envoyer le paquet à un processeur correspondant à l'identificateur de processeur reçu ; et
le module de maintenance de table de flux (24) devant recevoir l'information quintuple d'un paquet envoyé par le module de classification de flux (23), pour demander s'il existe une entrée de table de flux correspondant à l'information quintuple du paquet ;
si l'entrée de table de flux existe, devant obtenir l'identifiant de processeur dans l'entrée de table de flux et envoyer l'identifiant de processeur au module de classification de flux ;
si l'entrée de table de flux n'existe pas, devant créer une entrée de table de flux selon l'information quintuple du paquet envoyé par le module de classification de flux, l'entrée de table de flux comprenant l'information quintuple du paquet et l'identifiant de processeur du processeur pour traiter le paquet.

3. Appareil selon la revendication 2, dans lequel le préprocesseur (11) comprend en outre un module d'analyse de paquet (25) ;
le module de réception de paquet (21) devant en outre envoyer le paquet non fragmenté reçu au module d'analyse de paquet (25) ;
le module de traitement de paquet (22) devant en outre envoyer le paquet fragmenté au module d'analyse de paquet ;
le module d'analyse de paquet (25) devant :
analyser le paquet envoyé par le module de réception de paquet (21) et le paquet envoyé par le module de traitement de paquet (22), et
envoyer, si une détermination est faite comme quoi un flux auquel le paquet appartient a un flux approprié, l'information quintuple respective de flux qui s'apparentent au module de maintenance de table de flux pour demander au module de maintenance de table de flux de créer des entrées respectives de table de flux dans lesquelles l'information quintuple du paquet et l'information quintuple du flux approprié correspondent à un même identifiant de processeur ; et
le module de maintenance de table de flux (24) devant recevoir l'information quintuple envoyée par le module d'analyse de paquet, et créer les entrées de table de flux selon l'information quintuple, l'information quintuple du paquet et l'information quintuple du flux approprié correspondant au même identifiant de processeur dans chacune des entrées de table de flux.

4. Appareil selon la revendication 3, dans lequel le préprocesseur comprend en outre un module de suivi de processeur (26) ;
le module de suivi de processeur (26) devant obtenir des informations de chacun des au moins deux processeurs (12), les informations comprenant un identifiant de processeur de chacun des au moins deux processeurs, chacun des au moins deux processeurs fonctionnant normalement, et une situation de charge de chacun des au moins deux processeurs ; et
le module de maintenance de table de flux (24) devant en outre obtenir l'identifiant de processeur du processeur à partir du module de suivi de processeur (26), et créer les entrées de table de flux selon l'identifiant de processeur et l'information quintuple.

5. Appareil selon la revendication 4, dans lequel l'identifiant de processeur du processeur obtenu à partir du module de suivi de processeur par le module de maintenance de table de flux (24) est l'identifiant de processeur d'un processeur qui pour l'instant a la charge la plus petite.

6. Appareil selon la revendication 4, dans lequel le module de maintenance de table de flux doit en outre au moins soit établir une durée maximale d'utilisation pour une entrée de table de flux soit supprimer l'entrée de table de flux quand l'entrée de table de flux atteint la période d'utilisation la plus longue.

7. Procédé de traitement de paquet, ledit procédé devant être mis en oeuvre dans un serveur comprenant un préprocesseur (11) et au moins deux processeurs (12) respectivement connectés au préprocesseur, le procédé comprenant :
la réception (301), par le préprocesseur (11), d'un paquet issu d'une interface externe du serveur ;
la classification, par le préprocesseur (11), du paquet ; et
la distribution, par le préprocesseur (11), du paquet classifié vers un processeur parmi les au moins deux processeurs (12), les paquets d'un même flux de paquets étant distribués au même processeur et **caractérisés par le fait que** le préprocesseur distribue des paquets en flux de paquets, qui sont mutuellement appropriés, au même processeur,
les flux étant considérés comme des flux appropriés quand au moins l'une des conditions suivantes est satisfaite :
les paquets des flux ont la même adresse IP source, et
un paquet d'un flux étant une connexion de données et un paquet d'un flux comprenant un port pour une connexion de commande de FTP comprennent la même information d'uplet.

8. Procédé selon la revendication 7, dans lequel la classification du paquet par le préprocesseur (11) comprend :
la détermination (302) par le préprocesseur (11) si le paquet reçu est un paquet fragmenté ;
si le paquet est un paquet fragmenté,
le traitement (303) du paquet fragmenté,
l'obtention d'information quintuple complète du paquet fragmenté,
la détermination d'un processeur pour traiter le paquet selon l'information quintuple du paquet fragmenté, et
la distribution (309) du paquet au processeur déterminé ;
sinon, la détermination directe d'un processeur pour traiter le paquet selon l'information quintuple du paquet, et la distribution du paquet au processeur déterminé.

9. Procédé selon la revendication 8, dans lequel le traitement du paquet fragmenté et l'obtention de l'information quintuple complète du paquet fragmenté comprennent :
la détermination si le paquet fragmenté est le premier fragment selon l'information d'identification d'en-tête de paquet du paquet fragmenté ;
si le paquet fragmenté est le premier fragment, l'enregistrement de l'information quintuple et de l'information d'Identité de protocole Internet (IPID) du premier fragment ;
si le paquet fragmenté est un fragment suivant, la demande si l'information enregistrée contient une information quintuple correspondant à l'adresse IP source (SIP), à l'adresse IP destination (DIP) et l'information PROTOCOL dans l'information quintuple du fragment suivant ainsi que l'information IPID du fragment suivant ;
si l'information enregistrée contient l'information quintuple correspondante, l'obtention d'informations de PORT Source (SPORT) et de PORT Destination (DPORT) à partir de l'information quintuple correspondante, et l'utilisation des informations SIP, DIP et PROTOCOL dans l'information quintuple du fragment suivant et les informations SPORT et DPORT obtenues sous forme d'informations quintuples complètes du fragment suivant ;
si l'information enregistrée ne contient aucune information quintuple correspondante, le tamponnage du fragment suivant jusqu'à ce qu'un autre paquet fragmenté, qui est le premier fragment, soit reçu, l'enregistrement de l'information quintuple et de l'information IPID du premier fragment, la recherche de l'information enregistrée du premier fragment pour l'information quintuple correspondant aux informations SIP, DIP et PROTOCOL et à l'information IPID dans le fragment suivant tamponné pour obtenir les informations SPORT et DPORT à partir de l'information enregistrée du premier segment, et l'utilisation des informations SIP, DIP et PROTOCOL dans le fragment suivant et les informations SPORT et DPORT obtenues comme des informations quintuples complètes.

10. Procédé selon la revendication 9, dans lequel la détermination du processeur pour le traitement du paquet selon l'information quintuple du paquet comprend :
la détermination de la présence d'une entrée de table de flux correspondant à l'information quintuple du paquet ;
si l'entrée de table de flux existe, l'utilisation d'un processeur correspondant à un identifiant de processeur dans l'entrée de table de flux en tant que processeur pour traiter le paquet ;
sinon, le choix d'un processeur à partir des au moins deux processeurs (12) en créant une entrée de table de flux selon le processeur choisi et l'information quintuple du paquet, et l'utilisation du processeur choisi en tant que processeur pour traiter le paquet.

11. Procédé selon la revendication 10, dans lequel le processeur choisi est un processeur qui pour le moment a la charge la plus petite parmi les au moins deux processeurs ;
le procédé comprenant en outre :
après avoir choisi le processeur, la mise à jour de l'information de charge en cours du processeur choisi.

12. Procédé selon la revendication 10, comprenant en outre :
après réception du paquet, la détermination (307) du fait qu'un flux auquel appartient le paquet a un débit approprié ;
si le flux a un débit approprié, le choix d'un processeur parmi au moins deux processeurs, la création ou la modification d'une entrée de table de flux selon le processeur choisi et une information quintuple du flux, la création ou la modification d'une autre entrée de table de flux selon le processeur choisi et l'information quintuple du flux approprié (308), et l'utilisation du processeur choisi en tant que processeur servant à traiter le flux et le flux approprié.
